# FASCICULE DE BREVET EUROPEEN

(11) **EP 0 838 869 B1**
(45) Date de publication et mention de la délivrance du brevet: **30.08.2000**
(21) Numéro de dépôt: 97203202.3
(22) Date de dépôt: 14.10.1997
(51) Int. Cl.: H01M 2/12, H01M 2/02

(54) **Boîtier étanche pour contenir un accumulateur électrique**
Dichtes Gehäuse zur Aufnahme einer elektrischen Speicherzelle
Sealed housing for holding an electrical accumulator

(30) Priorité: 22.10.1996 FR 9612807
(43) Date de publication de la demande: 29.04.1998
(73) Titulaire: Koninklijke Philips Electronics N.V., 5621 BA Eindhoven (NL)
(72) Inventeur: Van Lerberghe, Steven, 75008 Paris (FR)
(74) Mandataire: Chaffraix, Jean

(56) Documents cités:
- WO-A-97/44837
- FR-A- 2 276 704
- GB-A- 2 198 877
- US-A- 2 628 271
- PATENT ABSTRACTS OF JAPAN vol. 012, no. 077 (E-589), 10 mars 1988 -& JP 62 216146 A (MATSUSHITA ELECTRIC IND CO LTD), 22 septembre 1987,
- PATENT ABSTRACTS OF JAPAN vol. 013, no. 114 (E-730), 20 mars 1989 -& JP 63 285862 A (YUASA BATTERY CO LTD), 22 novembre 1988,
- PATENT ABSTRACTS OF JAPAN vol. 010, no. 075 (E-390), 25 mars 1986 -& JP 60 220549 A (MATSUSHITA DENKI SANGYO KK), 5 novembre 1985,
- PATENT ABSTRACTS OF JAPAN vol. 016, no. 236 (E-1210), 29 mai 1992 -& JP 04 048548 A (SHIN KOBE ELECTRIC MACH CO LTD;OTHERS: 01), 18 février 1992,

## Description

L'invention concerne un boîtier étanche prévu pour résister à une certaine pression et destiné à contenir au moins un élément d'accumulation électrique notamment, boîtier formé d'au moins une paroi sur laquelle est prévue au moins une zone de fermeture formée d'un cordon plastique comportant une partie déplaçable.

L'invention concerne aussi un accumulateur plat constitué à partir d'un tel boîtier.

L'invention trouve d'importantes applications, par exemple pour contenir un accumulateur du genre plomb-acide.

Le brevet des Etats-Unis d'Amérique N° 5 326 652 décrit un tel accumulateur et son boîtier. Cependant dans ce document, le problème de la pression interne de l'accumulateur n'est pas mentionné. En effet, les accumulateurs créent des pressions à l'intérieur des enceintes constituées par les boîtiers qui les contiennent. Cette pression peut être quelquefois si forte que l'enceinte explose, surtout si l'accumulateur est du type comprenant du lithium. On peut alors prévoir des soupapes qui s'ouvrent lorsque la pression excède une certaine valeur incompatible avec la solidité de cette enceinte. Cependant, le cordon au niveau de la partie de serrage peut déborder des parois du boîtier de sorte qu'il peut arriver qu'il ne reprenne plus sa position initiale une fois que la pression du gaz retouve sa valeur normale. Un autre problème est que la pression intérieure soit cette fois-ci inférieure à la pression extérieure et il convient alors que l'air extérieur ne vienne pas polluer l'accumulateur.

La présente invention propose un boîtier du genre mentionné dans le préambule muni d'une soupape efficace et bon marché qui resout dans une large mesure les problèmes précités.

Pour cela, un tel boîtier est remarquable en ce qu'il est prévu un dispositif de butée pour imposer des limites au déplacement de ladite partie de serrage.

Ainsi grâce à l'invention, en cas de pression trop forte la partie de serrage, qui n'est pas fixée aux bords de parois, peut se déplacer et laisser une ouverture pour que le gaz créant un excès de pression puisse s'échapper. Le dispositif de butée permet aussi un déplacement tel que le cordon peut retrouver sa position initiale après une surpression, ou ne pas laisser passer l'air extérieur après une sous-pression.

La description suivante faite en regard des dessins ci-annexés, le tout donné à titre d'exemple non limitatif, fera bien comprendre comment l'invention peut être réalisée
La figure 1 montre une vue éclatée d'un boîtier conforme à l'invention.
La figure 2 montre en coupe la zone d'ouverture.
La figure 3 montre un autre exemple de réalisaton d'un boîtier conforme à l'invention.
La figure 4 montre une vue en coupe du boîtier de la figure 3.
La figure 5 montre un mode de réalisation du dispositif de butée.
La figure 6 montre une vue en plan d'une variante de réalisation.
La figure 7 montre un accumulateur plat formé à partir d'un boîtier, le tout conformément à l'invention.

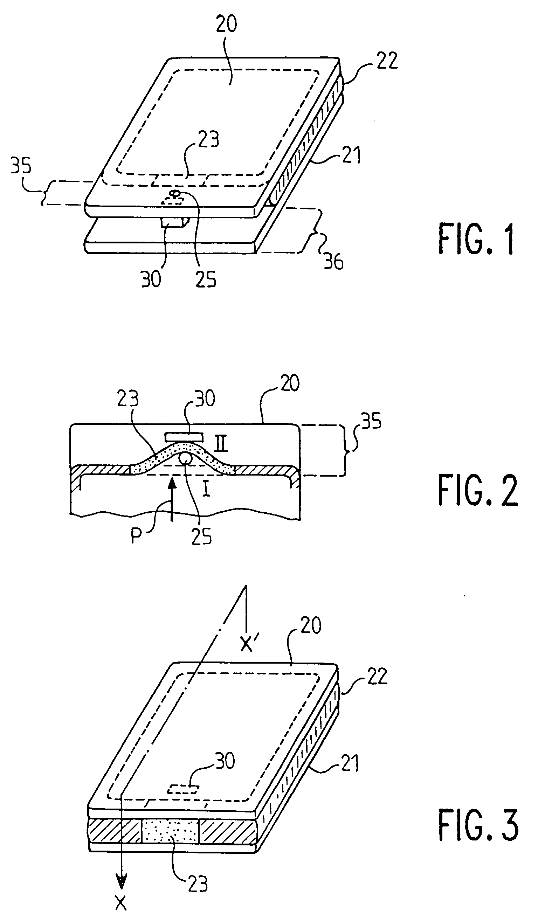

A la figure 1, on a montré un boîtier conforme à l'invention. On pourra se reporter à WO-A-97/44837 au nom de l'inventeur, correspondant du document EP-A-0 840 944, état de la technique selon l'Art. 54(3) CBE, pour d'autres détails de réalisation. Ce boîtier est formé de deux plaques 20 et 21 mises en vis-à-vis et reliées entre elles par un cordon de résine 22 à base de silicone qui est placé sur le pourtour de ces deux plaques 20 et 21. Le cordon constitue ainsi une zone de fermeture. Le format de ce boîtier rappelle celui des cartes de crédit utilisées par le grand public. Ce boîtier est plus précisément destiné à contenir des éléments de batterie au lithium-ion et/ou d'un type décrit dans le brevet des Etats-Unis d'Amérique n° 5 326 652, voire d'un condensateur d'alimentation de forte capacité. Dans le boîtier de la figure 1, le cordon de fermeture 22 comporte une partie d'adhérence et une partie de serrage 23. La partie d'adhérence est la partie pour laquelle le cordon plastique 22 est solidement collé auxdites plaques 20 et 21 soit par son adhérence naturelle, soit par une colle ou soit encore par soudure. La partie de serrage n'est pas collée du tout sur les bords, ou alors très peu collée. Ceci peut être réalisé par un revêtement en téflon. Cette partie 23 se maintient donc par serrage, coincée entre les deux plaques 20 et 21. Cette partie 23 peut aussi être maintenue par des rayures en creux qui tiennent en place, d'une manière adéquate, le cordon 22. Elle peut se déformer sous l'effet de la pression et laisser passer le gaz qui cause cette surpression excessive en passant au travers d'une ouverture 25. Ceci est mieux montré à la figure 2. Sous l'effet de la pression interne P, la partie dite de serrage glisse entre les deux plaques et découvre le trou 25.

Cependant, on veut éviter que la partie de serrage 25 du cordon ne dépasse les bords des deux plaques. Pour cela, conformément à l'invention, on a prévu un dispositif de butée 30 constitué ici par un taquet ménagé entre les deux plaques. Chacune des plaques 20 et 21 présente une avancée 35 et 36 respectivement, par rapport au cordon considéré dans sa position initiale. Cette position I est mieux montrée à la figure 2. Cette figure 2 montre la position II du cordon dans laquelle le cordon vient en butée sur le taquet 30.

Ainsi, par les mesures de l'invention, lorsque les excès de pression cessent, la partie de serrage peut, par glissement à l'intérieur des avancées 35 et 36 retrouver sa position initiale I et ne risque pas de se coincer à l'extérieur.

L'idée de la butée peut être prise en considération pour résoudre le problème de la pollution de l'élément d'accumulation par l'oxygène de l'air ce qui peut survenir après une surpression. Ceci est montré sur la figure 3.

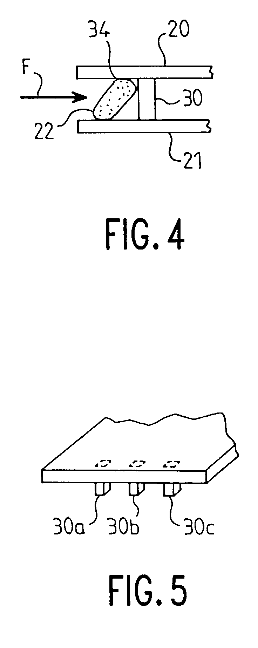

Ici, le taquet est placé à l'intérieur des plaques 20 et 21. La coupe XX' faite au niveau du taquet 30 est montrée à la figure 4. Ainsi, sous l'effet de la pression extérieure F, le cordon peut se tordre et peut laisser se former une fuite au niveau de la zone 34. Le taquet 30 empêche donc que cette torsion excessive n'entraîne une fuite de l'air extérieur vers l'intérieur.

Le dispositif de butée, montré dans les figures précédentes, était formé d'un seul taquet. Bien entendu, il peut être réalisé selon différentes manières, par exemple par une rangée de tels taquets 30a, 30b et 30c, comme montré à la figure 5.

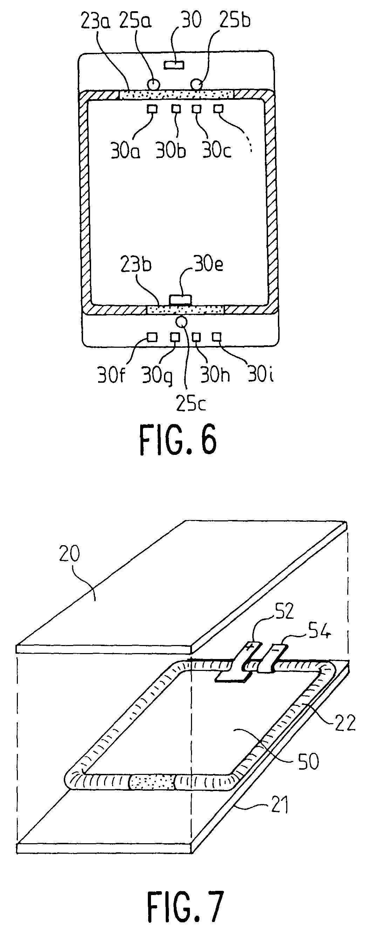

La figure 6 montre une manière qui combine les différentes façons de réaliser ledit boîtier.

Ainsi, le boîtier peut comporter une pluralité de zones de serrage 23a et 23b. On peut aussi prévoir une multitude de trous 25a et 25b. Des taquets 30a, 30b, 30c... empêchent le cordon de glisser vers l'intérieur et évitent donc que de l'oxygène ne pénêtre dans le boîtier. Un taquet 30 empêche, lui, que le cordon déborde à l'extérieur du boîtier. Au niveau de la zone 23b, un seul taquet est prévu pour le glissement intérieur alors qu'une rangée de taquets 30f, 30g, 30h 30i est prévue pour les glissements intérieurs. Ainsi, le déplacement de la partie de serrage 23 se trouve guidé par le dispositif de butée.

La figure 7 montre, en vue éclatée, un accumulateur conforme à l'invention. Il est constitué par un boîtier plat du type montré aux figures précédentes et par un élément d'accumulation 50 d'un type décrit dans le brevet précité. Les électrodes de cet élément sont accessibles par des plaquettes 52 et 54 qui sont enrobées par un cordon 11 de façon à assurer l'étanchéité.

Bien entendu, l'élément d'accumulation électrique peut être de tout autre type. De même, le cordon ne peut être placé que sur une partie du pourtour seulement, l'autre partie pouvant être alors constituée d'une matière rigide soudée ou moulée.

Le taquet 30 peut être formé d'une pièce élastique et/ou flexible.

## Revendications

1. Boîtier étanche prévu pour résister à une certaine pression et destiné à contenir au moins un élément d'accumulation électrique notamment, boîtier formé d'au moins une paroi, comportant au moins une zone de fermeture formée d'un cordon plastique comportant une partie de serrage déplaçable, caractérisé en ce qu'il est prévu un dispositif de butée pour imposer des limites au déplacement de ladite partie de serrage.

2. Boîtier étanche selon la revendication 1, caractérisé en ce que le dispositif de butée est formé d'un seul taquet.

3. Boîtier étanche selon la revendication 1, caractérisé en ce que le dispositif de butée est formé d'une pluralité de taquets.

4. Boîtier étanche selon l'une des revendications 1 à 3, caractérisé en ce qu'au niveau desdits bords est prévue au moins une ouverture à l'extérieur dudit cordon plastique et que la longueur de la partie de serrage est telle que sous l'effet d'un excès de pression, l'ouverture est mise en communication avec l'intérieur dudit cordon.

5. Boîtier étanche selon la revendication 1, caractérisé en ce que l'une des parois au moins comporte une avancée sur laquelle est disposé le dispositif de butée pour maintenir à l'intérieur ladite partie de serrage.

6. Accumulateur formé d'au moins un élément de batterie et d'un boîtier selon l'une des revendications 1 à 5.

7. Accumulateur selon la revendication 6, caractérisé en ce que lesdites parois sont constituées par des plaques, de sorte qu'il se présente sous une forme plate.

## Patentansprüche

1. Die Erfindung betrifft ein dichtes Gehäuse, vorgesehen, einem bestimmten Druck zu widerstehen und insbesondere dafür vorgesehen, mindestens eine elektrische Speicherzelle aufzunehmen, wobei das Gehäuse aus mindestens einer Wand gebildet wird, die mindestens einen Verschlußbereich aufweist, der aus einem Kunststoffstrang gebildet wird und einen beweglichen Festklemmteil aufweist, dadurch gekennzeichnet, daß eine Anschlagvorrichtung vorgesehen ist, um die Verschiebung des besagten Festklemmteils zu begrenzen.

2. Dichtes Gehäuse nach Anspruch 1, dadurch gekennzeichnet, daß die besagte Anschlagvorrichtung aus einem einzigen Anschlag gebildet wird.

3. Dichtes Gehäuse nach Anspruch 1, dadurch gekennzeichnet, daß die besagte Anschlagvorrichtung aus einer Vielzahl Anschlägen gebildet wird.

4. Dichtes Gehäuse nach einem der Ansprüche 1 bis 3, dadurch gekennzeichnet, daß auf der Ebene der besagten Ränder mindestens eine Öffnung außerhalb des besagten Kunststoffstrangs vorgesehen ist, und daß die Länge des Festklemmteils derart ist, daß unter der Wirkung eines Überdrucks die Öffnung mit dem Innern des besagten Strangs in Verbindung gebracht wird.

5. Dichtes Gehäuse nach Anspruch 1, dadurch gekennzeichnet, daß eine der Wände mindestens einen Vorsprung aufweist, auf dem die Anschlagvorrichtung angeordnet ist, um den besagten Festklemmteil im Innern zu halten.

6. Speicherzelle, gebildet aus mindestens einem Akkumulator und einem Gehäuse nach einem der Ansprüche 1 bis 5.

7. Speicherzelle nach Anspruch 6, dadurch gekennzeichnet, daß die besagten Wände aus Platten gebildet werden, um eine flache Form aufzuweisen.

## Claims

1. A moisture-proof housing for withstanding a certain pressure and intended for notably containing at least one electric accumulator element, the housing being formed by at least one wall on which there is at least one closing area formed by a plastic band which has a part that can be shifted, characterized in that a stop device is provided for imposing limits to the displacement of said tightening part.

2. The moisture-proof housing as claimed in claim 1, characterized in that the stop device is formed by a single lug.

3. The moisture-proof housing as claimed in claim 1, characterized in that the stop device is formed by a plurality of lugs.

4. A moisture-proof housing as claimed in one of the claims 1 to 3, characterized in that at the level of said edges at least one opening is made to the outside of said plastic band and in that the length of the tightening part is such that under the effect of excessive pressure, the opening is made to the inside of said band.

5. The flat moisture-proof housing as claimed in claim 1, characterized in that at least one of the walls has a protrusion on which is disposed the stop device for keeping said tightening part on the inside.

6. An accumulator formed by at least one battery element and a housing as claimed in one of the claims 1 to 5.

7. The accumulator as claimed in claim 6, characterized in that said walls are formed by plates, so that the accumulator is provided in a flat form.
